Europäisches Patentamt

(19) European Patent Office        (11) Publication number: **0 010 819**
Office européen des brevets                                    A1

# (12) EUROPEAN PATENT APPLICATION

(21) Application number: 79200639.7

(22) Date of filing: 02.11.79

(51) Int. Cl.³: **F 24 J 3/00,** C 09 K 5/06,
F 28 F 21/06
// B60H1/02, F24D11/00,
F02N17/04

(30) Priority: 06.11.78 NL 7811008

(71) Applicant: **Akzo N.V., Ijssellaan 82, NL-6826 DW
Arnhem (NL)**

(43) Date of publication of application: **14.05.80
Bulletin 80/10**

(72) Inventor: **Viezee, Dirk Jan, Ir., Vos de Waelstraat 6,
NL-6931 TW Westervoort (NL)**
Inventor: **Vleggaar, Jan, Dr., Lorentzlaan 36, NL-7002
HB Doetinchem (NL)**
Inventor: **Tiemersma, Heine Gerke Nicolai, Ir., Mr. Van
Hasseltlaan 26, NL-6891 AN Rozendaal (NL)**

(74) Representative: **Sieders, René et al, P.O.Box 314,
NL-6800 AH Arnhem (NL)**

(84) Designated Contracting States: **BE DE FR GB IT NL SE**

(54) **Apparatus for the storage of heat and use of said apparatus in heating systems.**

(57) The invention relates to an apparatus for the storage of heat, which apparatus contains a heat storage mass (5) and conduits (3, 4) for the supply and discharge of heat respectively to and from the storage mass (5). The storage mass is formed by a phase transition material which during heating and cooling can entirely or partly be made to change from the solid state to the liquid state or from the liquid state to the solid state.

The conduits (3, 4) are formed by channels having a hydraulic diameter not greater than 3 mm.

The apparatus according to the invention may advantageously be used in various heating systems. More particularly, the apparatus may be used in a heating system comprising a solar collector, in a space heating system, in a process for adapting heat requirement and heat emission to a process stream or for heating a motor vehicle with its engine switched off and/or a cold engine. The apparatus may also be used for heating a cold engine.

-1-

Apparatus for the storage of heat and use of said apparatus in heating systems.

The invention relates to an apparatus for the storage of heat, which apparatus comprises a heat storage mass and conduits for the supply and discharge of heat respectively to and from the storage mass, which is formed by a phase transition material which during heating and cooling can entirely or partly be made to change from the solid state to the liquid state or from the liquid state to the solid state.

Such an apparatus may be considered to be more or less known from the German Patent Specification 2 517 920. A disadvantage to said known apparatus is that it is so constructed and dimensioned that the available heat capacity of the storage mass is not optimally utilized, particularly in the case of a strongly fluctuating heat supply or discharge.

The invention has for its object to provide an apparatus of the type indicated above which no longer displays the above-mentioned disadvantage. The apparatus is characterized according to the invention in that the conduits are formed by channels having a hydraulic diameter not greater than 3 millimetres, and preferably smaller than 2 millimetres. According to the invention use may even be made of channels having a hydraulic diameter of 0,1 - 1 mm.

Favourable results may be obtained according to the invention if the apparatus is characterized in that the wall thickness of the channels is 5 to 20%, and particularly about 10% of the hydraulic diameter of the channels and that the ratio between the length of each channel and its hydraulic diameter is at least 100 and preferably 1000.

Obtaining favourable results may be promoted according to the invention if the apparatus is characterized in that the average distance between neighbouring channels that are not formed into a layer is one to twenty times, and preferably four to eight times, the hydraulic diameter of the channels.

A preferred embodiment is characterized according to the invention in that the channels are provided with such connections that the same channels may be used alternately for the supply of heat to and the discharge of heat from the storage mass. According to the invention the connections on the channels may be so constructed that in the discharge of heat from the storage mass the direction of flow is opposite to that in the supply of heat to the storage mass. Favourable results also may be obtained according to the invention if the apparatus is characterized in that separate groups of channels are provided respectively for the supply of heat to and the discharge of heat from the storage mass.

Also in this last-mentioned construction comprising separate groups of channels for the supply and the discharge of heat the connections on the channels may be so constructed that in the channels for the discharge of heat from the storage mass the direction of flow is opposite to the direction of flow in the channels for the supply of heat to the storage mass. Particularly if for heating and cooling use is made of different fluids such as, for instance, respectively a liquid and a gas, the apparatus according to the invention may with advantage be characterized in that the hydraulic diameter of the channels for the supply of heat to the storage mass differs from the hydraulic diameter of the channels for the discharge of heat from the storage mass. The invention is particularly directed to an apparatus which is characterized in that the channels are formed by hollow fully synthetic or semi-synthetic filaments. Said channels and hollow filaments may according to the invention be formed from one or more of the following substances or mixtures thereof:

polyolefins, such as polyethylene, polypropylene and
        polyisobutylene;

polystyrene and copolymers (random, alternating and block)
        of styrene and butadiene, acrylonitrile and
        acrylate esters;

polyhaloolefins, such as polyvinyl chloride and
        polytetrafluoroethylene;

polyvinyls, such as polyvinyl alcohol and
        polyvinyl acetate;

polyacrylates and polymethacrylates, such as polymethylmethacrylate
        and polymethylacrylate and other polyacrylates;

polyacrylonitrile;

elastomers such as natural rubber, synthetic rubbers,
        for instance silicone rubbers or polyolefinic rubbers or copolymers of the ethylene-propylene rubber
type (E P D M);
polyoxides, such as polypropylene oxide and
poly-2,6-dimethylphenylene oxide;
saturated and unsaturated polyesters, such as
polyethylene terephthalate;
polyamides, such as nylon 6, nylon 66 and
aromatic polyamides;
polycarbonates;
polyimides;
polybenzimidazoles;
polyurethanes;
semi-synthetic polymers, such as regenerated cellulose, more
particularly those based on copper acetate;
thermohardening resins, such as epoxy resins and aminoplastics;
copolymers of two or more of the above-mentioned polymers;
polysulphones;
inorganic polymers, such as polyphosphazenes.

According to the invention the channels may further be provided with a liquid-tight coating, more particularly a coating based on a metal or a polymer.

The apparatus according to the invention allows of a rapid heat transfer attended with a great difference in temperature across the heat-carrying stream through the storage mass between the inlet and the outlet. The use according to the invention of the channels or tubes of a small diameter and a small wall thickness leads to a very large heat transferring surface per unit volume of the storage device. The apparatus according to the invention may be of a compact construction which is inexpensive and simple to realize.

Depending on its field of application the apparatus according to the invention may with advantage be characterized in that the tubes are of glass.

A favourable embodiment of the apparatus is characterized according to the invention in that a group of channels is provided in the form of a layer. According to the invention there are with advantage provided at least two layers of channels, which layers

-4-

are separated by a layer of storage mass, the thickness of which is one to twenty times, and preferably five times, the hydraulic diameter of the channels. According to the invention the channels in each layer may be adjoining. A simple construction is characterized according to the invention in that the channels of each layer extend parallel to the channels of neighbouring layers. The apparatus according to the invention also may be characterized in that the channels of each layer cross the channels of the next layers, more particularly at an angle of $90^{\circ}$.

The apparatus according to the invention may be made in a simple manner if it is characterized in that the channels are entirely or partially provided in the form of a helix and/or a spiral, the channels being formed into several layers and the channels of each layer multiply crossing the channels of the next layer of channels and the channels being made of a multi-layer winding. The apparatus according to the invention is with advantage characterized in that the groups of channels are formed from a woven fabric, a knitted fabric, a web or some other channel pattern obtained by a laying process. A special embodiment of the apparatus is characterized according to the invention in that a group of channels forming a layer is so arranged that the hollow channels placed next to each other in the group each extend in the form of flat spirals which lie in adjacent planes.

An effective embodiment according to the invention is then characterized in that the spiral form extends from the outside inwardly and subsequently reverses to spirally extend from the inside outwardly or inversely.

The invention is more particularly directed to an apparatus which in combination with the preceding characteristics is characterized in that the storage mass is formed by a phase transition material which during heating and cooling can entirely or partly be made to change from the solid state to the liquid state or from the liquid state to the solid state.

According to the invention it is preferred that as a phase transition material one or more of the following salt hydrates be used: $Na_2SO_4 \cdot 10H_2O$; $Na_2SO_3 \cdot 5H_2O$;

$Ca\ Cl_2.6H_2O;\ Na_2CO_3.10H_2O;$

$Na\ PO_4.12H_2O;\ KF.4H_2O;\ Ca\ (NO_3)_2.4H_2O;$

$Mg\ Cl_2.6H_2O;\ Ba\ OH.8H_2O;\ Zn\ NO_3.6H_2O;\ K_3PO_4.7H_2O;$

$Na_2HPO_4.12H_2O;\ K_2HPO.6H_2O;\ LiNO_3.3H_2O;$

$Mg\ (NO_3)_2.6H_2O.$

According to the invention the salt hydrates may with advantage contain a stabilizer, for instance: silicagel, which inhibits phase separation.

Favourable results also may be obtained if the apparatus according to the invention is characterized in that the phase transition material is formed by paraffin. The apparatus according to the invention in which channels having a small diameter are combined with a storage mass in the form of said phase transition material, allows of a particularly rapid displacement of the melting front in the direction of flow past the tubes. As a result, the heat transfer proceeds as it were convectively, whereas known systems display a substantially diffusive heat transfer behaviour.

A preferred embodiment of the apparatus is characterized according to the invention in that the phase transition material is included in a matrix which is formed by a synthetic material, more particularly a polymeric resin, such as an epoxy resin, a polyester resin or like resins, which matrix has a large number of voids filled with a phase transition material. An inexpensive and effective embodiment of the apparatus according to the invention is characterized in that the matrix is substantially composed of synthetic fibres.

The combined use in the storage divice according to the invention of thin-walled tubes having a small diameter and said phase transition material in a matrix leads to optimum heat transfer while maintaining the stabilizing influence of the matrix on salt hydrates. This compensates for possibly less satisfactory heat conductance of the matrix material. Moreover, the use in a storage device according to the invention of tubes having a small diameter and phase transition material in a matrix leads to a construction displaying a combination of strength and flexibility as far as shaping is concerned.

It should be added that the afore-mentioned hydraulic diameter "D" = $\frac{4.A}{O}$ , where O = the circumference of a tube through which there is a flow of fluid and A = the cross-sectional area of a channel through which there is a flow of fluid. Consequently, when use is made of channels having a circular cross-section, the diameter D is equal to the hydraulic diameter, so that with channels having an inner diameter of 2 mm also the hydraulic diameter is 2 mm. When use is made of channels having a rectangular internal cross-section of, say, 2 x 5 mm, the hydraulic diameter "D" = 2,86 mm. Of course also various other cross-sectional shapes may be used. Favourable results may be obtained when use is made of the apparatus according to the invention in a heating system comprising a solar collector and in a space heating system, for instance in houses and buildings. The apparatus for the storage of heat according to the invention also may with advantage be used in a process for adapting heat requirement and heat emission to a process stream.

The apparatus for the storage of heat according to the invention lends itself particularly well to heating a motor vehicle with its engine switched off and/or a cold engine instead of by the specially provided petrol-fired heaters used up till now. Or it may be used exclusively for pre-heating a cold engine.
The invention will be further described with reference to the accompanying schematic drawing. For simpplicity and illustration the number of tubes in the drawing and the number of layers in the drawing are far smaller than in reality.

Figures 1, 2, 3 and 4 show different block-shaped heat storage devices according to the invention.

Figure 5 shows a detail of the apparatus according to Figure 1 on a larger scale.

Figures 6 and 7 show a somewhat different type of a block-shaped storage device.

Figure 8 shows a connecting arrangement for a number of block-shaped storage devices.

Figures 9, 10 and 11 show again another type of storage device and a way of obtaining such a device.

Figures 12 and 13 show a few applications of the storage device according to the invention.

Figures 14 and 15 show the storage devices to be employed for the applications according to Figure 13.

Figure 16 shows another storage device according to the invention.

Figures 17 and 18 also relate to storage devices of the block type.

Figures 19-23 show various cross-sectional shapes of tubes.

Figures 24 and 25 relate to tubes having a rectangular cross-section.

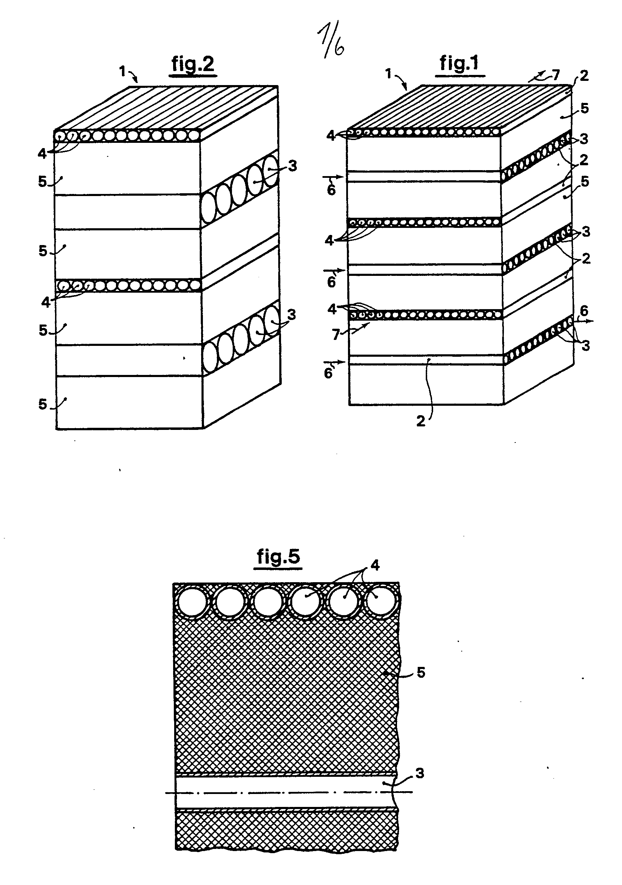

Figure 1 shows part of a block-shaped apparatus according to the invention for the storage of heat, which apparatus is generally referred to by the numeral 1. This block 1 is made up of a large number of successive layers 2 each forming a group of hollow synthetic filaments 3,4. The hollow synthetic filaments 3,4 form channels having a hydraulic diameter of not more than 3 mm. Between the layers 2 formed by the channels are separating layers 5 consisting of a storage mass. The thickness of the separating layers 5 is one to twenty times, and preferably five times the hydraulic diameter of the channels 3,4. The layers 5 of a storage mass may consist of one or more of said salt hydrates which are included in a matrix whose form may vary. In Figure 1 the hollow filaments 3,4 of each layer 2 form a flat surface. In each layer 2 the hollow filaments 3,4 run parallel to each other, but the hollow filaments 3 and 4 of successive layers cross at right angles. In each layer of filaments the space around and between the hollow filaments forming the tubes also may be filled with a matrix containing salt hydrates. The hollow filaments 3 are provided with suitable connections (not shown) for the supply and discharge during the heating period of an originally hot fluid in the direction indicated by the arrows 6. The hollow filaments 4 are provided with suitable connections (not shown) for the supply and discharge during the cooling period of an originally cold fluid in the directions indicated by the arrows 7. During said heating period the originally solid salt hydrates are partially or entirely brought into the liquid phase, the high heat of solidification being released.

Besides the connections (not shown) for the two tube systems 3,4 the block 1 must be provided with proper external insulating material.

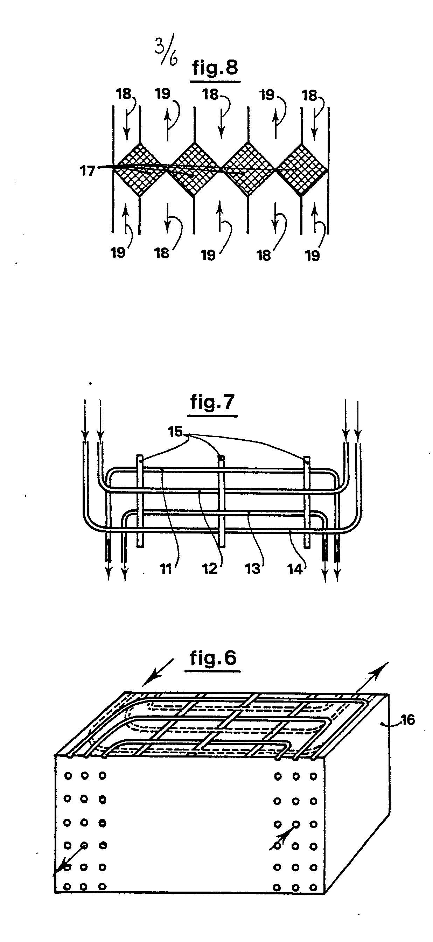

Figure 5 shows a detail of Figure 1 on a larger scale.

Figure 2 is another view of a block-shaped storage device, like parts being referred to by the same numerals as used for Figure 1. The apparatus according to Figure 2 mainly differs from the one according to Figure 1 in that the tubes 3 have a greater diameter than the tubes 4. The tubes 4 serve to transport a liquid and the tubes 3 serve to transport a gaseous fluid.

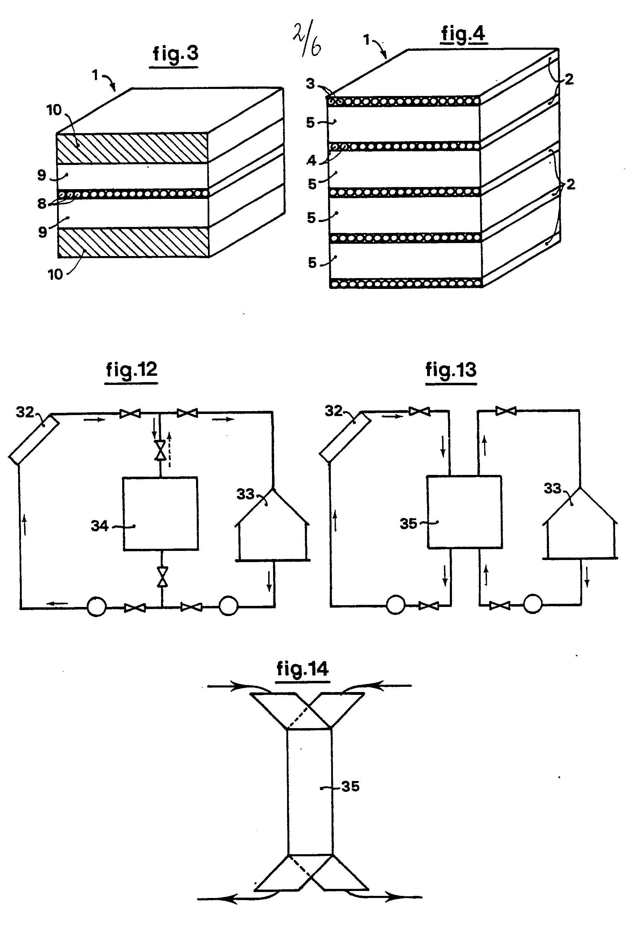

Figure 3 shows a construction of a block-shaped storage device comprising only one layer of tubes which, with the aid of suitable connections can be used both during the heating period and the cooling period of the storage device.This implies that the same group of tubes 8 is used both for the storage of heat and for the withdrawal of heat from the storage device. The layer of tubes is embedded on either side in phase transition material in the form of salt hydrates which are included in the matrix 9. The matrix must be provided with proper external thermal insulating means. Part of the insulating means at the bottom and at the top is referred to by the numeral 10.

Figure 4 shows a somewhat varied storage device of the block type, like parts being referred to by like numerals. This embodiment mainly differs from the one according to Figure 1 in that the tubes in the successive groups run parallel to each other. The thickness of the matrix layers filled with the storage mass is one to twenty times the hydraulic diameter of the tubes 3,4.

Figure 6 shows again another type of block-shaped storage device. Figure 7 shows a mat of four parallel tubes 11, 12, 13, 14 which are interconnected by transverse strips 15. A large number of the mats of Figure 7 are combined into the block 16 shown in Figure 6, for instance by casting a large number of these mats into a matrix which is to a great extent filled with a storage mass. The storage of heat during the heating period of the block 16 and the emission of heat during the cooling period of the block 16 can be effected with the aid of suitable connections.

Figure 8 shows an embodiment in which a number of units 17 of block-shaped storage devices are formed into an integrated whole. All units 17 are in themselves of the type represented in Figure 1, the successive layers of channels crossing each other. During the heating period the heating fluid flows in the direction indicated by the arrows 18. During the cooling period of the storage device the heat-absorbing fluid flows in the direction indicated by the arrows 19. Also in the case of this apparatus the heating and the cooling periodsmay overlap.

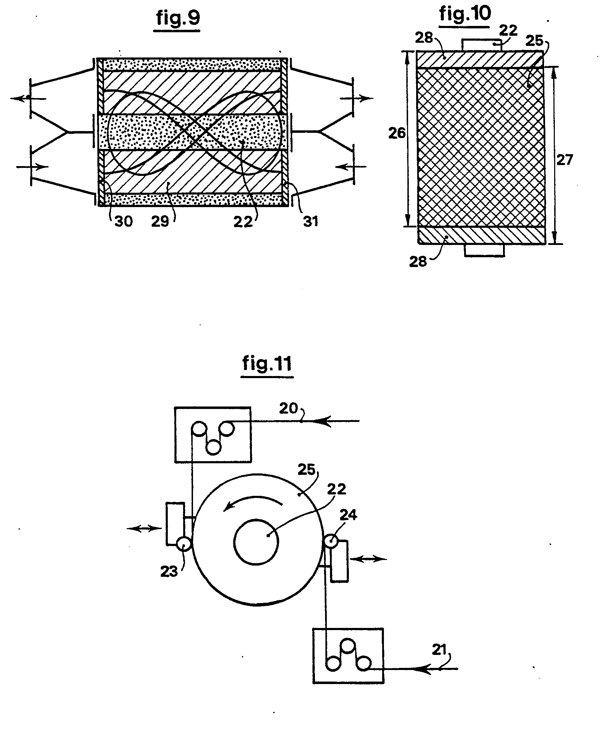

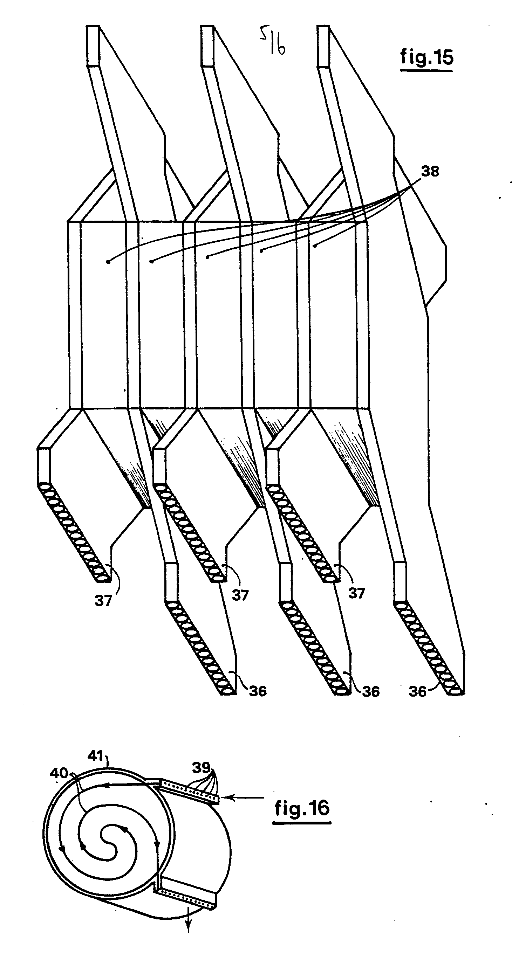

Figure 9 shows a somewhat different type of storage device, in which the tubes are helically shaped and are made up of a winding as indicated in Figures 10 and 11. As is shown in Figure 11, two tubes in the form of hollow synthetic filaments 20 and 21 are fed to a rotating bobbin 22 in the directions indicated by the arrows and wound into a package 25 with the aid of traverse elements 23 and 24. The strokes of the two traverse mechanisms extend over somewhat staggered regions 26 and 27. Consequently, at the heads of the package 25 there will form zones 28 which each contain only one of the two hollow filaments 20, 21.

After completion of the winding process the package 25 is impregnated with a phase transition material, such as a salt hydrate, in a matrix of polyester resin. After hardening the two end zones 28 are cut off. Removing the end zones 28 leaves a package 29 which is at its one end 30 provided with inflow and outflow openings for a first medium during the heating period and at its other end 31 with inflow and outflow openings for a second medium during the cooling period. The flow of the two media is schematically indicated by arrows and lines. The package 29 is provided with a satisfactorily thermally insulating sheath.

Figure 12 is a schematical view of a heating system in which a solar collector 32 functions as heat source. The building to be heated is referred to by the numeral 33 and a heat storage device according to the invention by the numeral 34. The pipe system and a few valves and pumps to be used are also shown schematically. In the day time, when the sun shines, the solar collector will often supply more heat, for instance in the form of hot water or air, than is required for heating the house 33. The heat surplus in the day time is then stored in the heat storage device 34. Overnight the heat in the storage device may be used for heating purposes then.

Figure 13 is also a schematical view of a heating system for a house 33 containing a solar collector 32 or a group of solar collectors arranged in a system comprising a storage device 35 according to the invention. There the storage device 35 for heat is of the type separately shown in Figures 14 and 15 and mainly consisting of groups of parallel tubes 36 and 37 which are separated by matrix layers 38 including a heat storage mass, more particularly salt hydrates. The directions of flow of the various fluids during the heating and the cooling period are indicated in Figure 14 by arrows.

Figure 16 shows again another type of heat storage system. In Figure 16 a group forming a layer of tubes 39 is so arranged that the tubes 39 each extend in the form of flat spirals 40 which lie in adjacent planes. The spirals 40 extend from the outside inwardly and subsequently from the inside outwardly, in the directions indicated by the arrows. The spiral of tubes 39 is accomodated in a cylindrical housing 41 which is filled up between said tubes with a heat storage mass, more particularly a salt hydrate. During the heating period use could be made of the same tubes 39 as during the cooling period. Alternatively, several groups of tubes 39 each forming a spirally shaped layer could be accomodated in the housing 41.

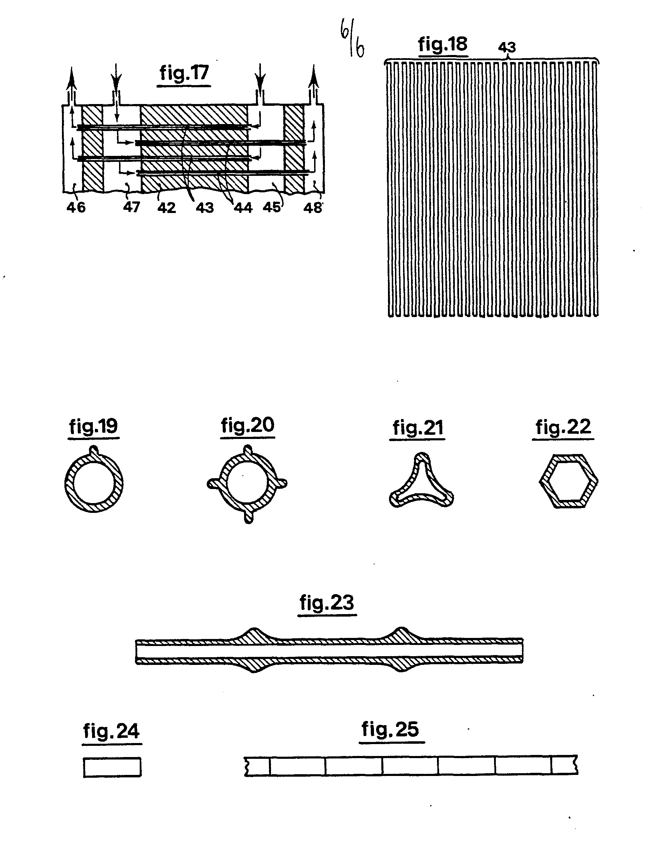

Figure 17 again shows part of a block-shaped heat storage device according to the invention. The block 42 consists of a matrix containing salt hydrates. The block 42 contains a large number of groups of hollow filaments 43 and 44 forming successive layers of tubes. In Figure 18 one of the tube layers 43 is drawn separately. The groups of filaments 43 are all connected to a common supply channel 45 and to a common discharge channel 46 for a first medium that serves to heat the storage device. Likewise, the groups of hollow filaments 44 are all connected to a common supply channel 47 and a common discharge channel 48 for a second medium that is to be used for the emission of heat. The directions of flow are indicated by arrows.

Figures 19, 20, 21, 22 and 23 are cross-sectional views of different conceivable embodiments of the tubes according to the invention.

-11-

Figure 24 shows a tube having a rectangular cross-section.
Figure 25 shows a simple embodiment of a large number of contiguous conduits or tubes according to the invention.

The invention will be further described in the following e examples.

Example 1

A block-shaped heat storage device of the type according to Figure 4 was built up from alternating layers of a row of hollow fibres for the supply and discharge of heat and a salt hydrate embedded in a matrix of polyester resin for heat storage.
Each layer of hollow fibres consisted of 100 closely contiguous glass capillaries having an external diameter of 2 mm, an internal diameter of 1,6 mm and a length of 100 cm. This mixture was contained in cavities of a matrix of polyester resin in a mix ratio of 3 parts of salt hydrate to one part of matrix material. The heat storage medium consisted of a mixture of $Na_2SO_4 \cdot 10H_2O$ containing about 3% by weight borax (sodium tetraborate decahydrate) to avoid supercooling.

The melting and crystallization temperature of this storage mass is about $32^{\circ}C$.
The block contained 16 layers of hollow fibres with between them layers of storage mass 10 mm thick in the form of salt hydrate. Above and below the topmost and the lowermost glass fibre layer was still a 5 mm-thick layer of salt hydrate.

The device was provided with an inlet and an outlet for water flowing through the hollow fibres and it was properly insulated to prevent losses of heat.

With this block two experiments were carried out.

At the start of the first experiment the entire block was at a temperature of $20^{\circ}C$ and the entire storage mass had crystallized out and was consequently in the solid state. First of all water was supplied at a temperature of $42^{\circ}C$ at a rate of 30 litres per hour. The temperature of the outflowing water was recorded. After a rapid rise the temperature remained for several hours at practically the same level as the melt temperature of the salt hydrate. After about 5 hours the temperature of the issuing water slowly began to rise followed by a gradually more rapid rise. Six hours after the start of the experiment the temperature had gone up to $37^{\circ}C$, followed again by a decreasingly rapid rise in temperature. After 7 hours the water flowing out of the device had practically the same temperature as the water flowing into it. This completed the first part of the first experiment. From integration of the temperature gradient and the total amount of water passed through the device it was calculated that the heat storage mass had absorbed 7,85 MJ.

In the second part of the first experiment water of $22^{\circ}C$ was fed to the heated block at the same rate of 30 litres per hour but in a direction of flow opposite to that in the first part of the experiment. Again the temperature of the water flowing out of the block was measured. After a few minutes the temperature of the outflowing water reached a value which hardly differed from the melting temperature of the salt hydrate ($32^{\circ}C$).

Here too the temperature remained practically constant for about 5 hours, after which there was first a slow and then a more rapid decrease of the temperature of the outflowing water.

Six hours after the start of the cooling period the temperature had dropped to $27^{\circ}C$. After 7 hours the temperature of the water flowing out of the device had reached the temperature of $22^{\circ}C$ of the water flowing into it. From the results of measurements it was calculated that the heat storage mass had given off 7,6 MJ (Mega Joule) to the water.

The second experiment was carried out in practically the same way as the first, except as regards the times in which heat was supplied and discharged. The supply of warm water of $42^{\circ}C$ was stopped three hours after the start of the experiment and immediately afterwards water of $22^{\circ}C$ was fed to the block in opposite direction. Then again crystallization of the initially melting salt hydrate must take place. If this crystallization should be delayed, then the temperature of the outflowing water will decrease to below the crystallization temperatures of the salt hydrate. The Borax that had been added was found so to promote crystallization that there was no appreciable decrease in temperature. Practically immediately after reversal of the direction of flow the water leaving the device was stabilized at $32^{\circ}C$. Two hours after the reversal this temperature slowly started to decrease indicating that the supply of stored heat was coming to an end.

0010819

Example II

A block-shaped heat storage device of the type indicated in Figure 15 was built up from the following layers:

A) A heat storage mass consisting of a mixture of $Na_2SO_4 \cdot 10H_2O$ and about 3% by weight of borax to prevent supercooling. This mixture was contained in voids in a matrix of polyester resin in a mix ratio of 3 parts of salt hydrate to one part of matrix material. This layer of storage mass had the following dimensions:
thickness 5 mm; width 20 cm; length 100 cm.

B) A row of 200 hollow glass filaments, external diameter 1 mm; internal diameter 0,8 mm, length 100 cm.

C) A row of 100 hollow glass filaments, external diameter 2 mm; internal diameter 1,6 mm; length 100 cm.

The block was formed by using the following stacking order:
B-A-C-A-B-A .......... A-C-A-B
In all: 32 layers A, 17 layers B and 16 layers C.

Through the hollow filaments of layer A warm water of $42^{\circ}C$ was supplied at a rate of 15 litres per hour. Through the hollow filaments of layer B air of $20^{\circ}C$ was fed countercurrently to the flow in A and at a rate of 12 $m^3$/hour.
Within half an hour a state of equilibrium was reached, the temperatures of the water and the air leaving the device both assuming a value which did not appreciably differ from the melting temperature of the salt hydrate ($32^{\circ}C$). After 3 hours the supply of water was stopped. The supply of air, however, was maintained. The temperature of the outgoing air remained at a constant level for another 2,5 hours, after which within about one hour it gradually decreased to that of the air coming in ($20^{\circ}C$).

The Netherlands Patent Specification 7 710 307 describes an apparatus for the storage of heat in which the storage mass is formed by parallel slabs of a meltable material. Placed between these slabs is a layer having a wavy cross-sectional shape which forms channels having a relatively large cross-sectional area for feeding heat emitting or heat absorbing air.

U.S. Patent Specification 3 616 022 relates to a process for manufacturing components for heat exchangers comprising synthetic hollow filaments. With the heat exchangers shown in this patent specification the hollow filaments extend substantially rectilinearly in their longitudinal direction. This publication does not describe any heat storage system

-14-

realized with the aid of a phase transition material.

French Patent Specification No. 2 365 093 describes a heat storage system in which the storage mass may for instance be a salt hydrate. Through the block of salt hydrate there extends a single zig-zag shaped channel formed between two parallel plates having a relatively large cross-sectional area and hence a large hydraulic diameter.

In ASHRAE Jouranl, Vol. 16, No. 9, September 1974, p.38-44, a great many salt hydrates are described that may be used as heat storage mass.

The Netherlands Patent Specification 7 604 124 describes an apparatus for the storage of heat by means of a particular salt hydrate. In this publication it is moreover proposed that the apparatus should be connected to solar collectors.

The French publication Energie Solaire Actualités, No. 27, September 1978, "Accumulateur et paraffine" mentions a heat storage system in which as storage mass paraffin is used.

United States Patent Specification 4 003 426 describes a system for heat storage in which a phase transition material is enclosed in large number of voids formed in a matrix material.

Within the scope of the invention various modifications may be made.

-15-

## C L A I M S

1. An apparatus for the storage of heat, which apparatus comprises a heat storage mass and conduits for the supply and discharge of heat respectively to and from the storage mass, which is formed by a phase transition material which during heating and cooling can entirely or partly be made to change from the solid state to the liquid state or from the liquid state tothe solid state, characterized in that the conduits are formed by channels having a hydraulic diameter not greater than 3 millimeters.

2. An apparatus according to claim 1, characterized in that the wall thickness of the channels is 5 to 20%, and particularly about 10% of the hydraulic diameter of the channels.

3. An apparatus according to one or more of the preceding claims, characterized in that the ratio between the length of each channel and its hydraulic diameter is at least 100 and preferably higher than 500.

4. An apparatus according to one or more of the preceding claims, characterized in that the average distance between neighbouring channels that are not formed into a layer is one to twenty times, and preferably four to eight times, the hydraulic diameter of the channels.

5. An apparatus according to one or more of the preceding claims, characterized in that the channels are provided with such connections that the same channels may be used alternately for the supply of heat to and for the discharge of heat from the storage mass.

6. An apparatus according to claim 5, characterized in that the connections on the channels are so constructed that in the discharge of heat from the storage mass the direction of flow is opposite to that in the supply of heat to the storage mass.

7. An apparatus according to one or more of the claims 1-4, characterized in that separate groups of channels are provided respectively for the supply of heat to and the discharge of heat from the storage mass.

-16-

8. An apparatus according to claim 7, characterized in that the hydraulic diameter of the channels for the supply of heat to the storage mass differs from the hydraulic diameter of the channels for the discharge of heat from the storage mass.

9. An apparatus according to claim 7 or 8, characterized in that the connections on the channels may be so constructed that in the channels for the discharge of heat from the storage mass the direction of flow is opposite to the direction of flow in the channel for the supply of heat to the storage mass.

10. An apparatus according to one or more of the preceding claims, characterized in that the channels are formed by hollow fully synthetic or semi-synthetic filaments.

11. An apparatus according to one or more of the preceding claims, characterized in that the channels are formed by one or more of the following substances or mixtures thereof:
polyolefins, such as polyethylene, polypropylene and
       polyisobutylene;
polystyrene and copolymers (random, alternating and block)
       of styrene and butadiene, acrylonitrile and
       acrylate esters;
polyhaloolefins, such as polyvinyl chloride and
       polytetrafuoroethylene;
polyvinyls, such as polyvinyl alcohol and
polyvinyl acetate;
polyacrylates and polymethacrylates, such as polymethylmethacrylate and polymethylacrylate and other polyacrylates;
polyacrylonitrile;
elastomers such as natural rubber, synthetic rubbers,
       for instance silicone rubbers or polyolefinic
       rubbers or copolymers of the ethylene-propylene rubber
       type (E P D M);
polyoxides, such as polypropylene oxide and
       poly-2,6-dimethylphenylene oxide;
saturated and unsaturated polyesters, such as
       polyethylene terephthalate;

0010819

-17-

polyamides, such as nylon 6, nylon 66 and aromatic polyamides;

polycarbonates;

polyimides;

polybenzimidazoles;

polyurethanes;

semi-synthetic polymers, such as regenerated cellulose, more particularly those based on copper acetate;

thermohardening resins, such as epoxy resins and aminoplastics;

copolymers of two or more of the above-mentioned polymers;

polysulphones;

inorganic polymers, such as polyphosphazenes.

12. An apparatus according to claim 11, characterized in that the channels are provided with a liquid-tight coating.

13. An apparatus according to claim 12, characterized in that the channels are provided with a coating based on a metal.

14. An apparatus according to claim 12, characterized in that the channels are provided with a coating based on a polymer.

15. An apparatus according to one or more of the claims 1-9, characterized in that the channels are of glass.

16. An apparatus according to one or more of the preceding claims, characterized in that a group of channels is provided in the form of a layer.

17. An apparatus according to claim 16, characterized in that there are provided at least two layers of tubes, which layers are separated by a layer of storage mass, the thickness of which is one to twenty times, and preferably two to five times, the hydraulic diameter of the channels.

18. An apparatus according to claim 16 or 17, characterized in that the channels in each layer are adjoining.

19. An apparatus according to one or more of the claims 16-18, characterized in that the channels of each layer extend parallel to the channels in neighbouring layers.

20. An apparatus according to one or more of the claims 16-19, characterized in that the channels of each layer cross the channels of the next layers.

21. An apparatus according to claim 20, characterized in that the channels of each layer cross the channels of the next layers at right angles.

22. An apparatus according to one or more of the claims 1-15, characterized in that the channels are entirely or partially provided in the form of a helix and/or a spiral.

23. An apparatus according to claim 22, characterized in that the channels are provided in several layers, the channels of each layer multiply crossing the channels of the next layers.

24. An apparatus according to claim 22 or 23, characterized in that the channels are made of a multi-layer winding.

25. An apparatus according to one or more of the claims 1-15, characterized in that the groups of channels are formed from a woven fabric, a knitted fabric, a web or some other tube pattern obtained by a laying process.

26. An apparatus according to one or more of the claims 1-15, characterized in that a group of channels forming a layer is so arranged that the hollow channels placed next to each other in the group each extend in the form of flat spirals which lie in adjacent planes.

27. An apparatus according to claim 26, characterized in that the spiral form extends from the outside inwardly and subsequently reverses to spirally extend from the inside outwardly or inversely.

28. An apparatus according to one or more of the preceding claims, characterized in that the phase transition material is formed by a salt hydrate.

-19-

29. An apparatus according to claim 28, characterized in that one or more of the following salts are used:

$Na_2SO_4.10H_2O$ ; $Na_2S_2O_3.5H O_2$;

$Ca Cl_2.6H_2O$ ; $Na_2CO_3.10H_2O$ ;

$Na_2PO_4.12H_2O$ ; $KF.4H_2O$ ; $Ca (NO_3)_2.4H_2O$ ;

$Na_2HPO_4.12H_2O$ ; $K_2HPO_4.6H_2O$ ; $LiNO_3.3H_2O$ ;

$Mg (NO_3)_2.6H_2O$ ; $Mg Cl_2.6H_2O$ ; $Ba OH.8H_2O$ ; $Zn NO_3.6H_2O$ ;

$K_3PO_4.7H_2O$.

30. An apparatus according to one or more of the claims 1-27, characterized in that the phase transition material is formed by paraffin.

31. An apparatus according to claim 28 or 29, characterized in that the salt hydrates contain a stabilizer, for instance silica gel, to inhibit phase separation.

32. An apparatus according to one or more of the preceding claims, characterized in that the phase transition material is enclosed in a matrix.

33. An apparatus according to claim 32, characterized in that the matrix is formed by a synthetic material, more particularly a polymer resin, such as epoxy resin, a polyester resin or like resins, which matrix has a large number of voids filled with a phase transition material.

34. An apparatus according to claim 32, characterized in that the matrix is substantially composed of fully or semi-synthetic fibres.

35. An apparatus according to one or more of the preceding claims, characterized in that it is used in a heating system comprising a solar collector.

36. An apparatus according to one or more of the claims 1-34, characterized in that it is used in a space heating system.

-20-

37. An apparatus according to one or more of the claims 1-34, characterized in that it is used in a process for adapting heat requirement and heat emission to a process stream.

38. An apparatus according to one or more of the claims 1-34, characterized in that it is used for heating a motor vehicle with its engine switched off and/or a cold engine.

39. An apparatus according to one or more of the claims 1-37, characterized in that it is used for heating up a cold engine.

**fig.2**

**fig.1**

**fig.5**

0010819

fig.3

fig.4

2/6

1

10

9

8

9

10

1

3

5

4

5

5

5

2

2

fig.12

fig.13

32

34

33

32

35

33

fig.14

35

**fig.8**

18  19  18  19  18

17

19  18  19  18  19

**fig.7**

15

11  12  13  14

**fig.6**

16

fig.9

fig.10

fig.11

0010819

fig.15

38

37

37

37

36

36

36

41

40

39

fig.16

6/6

**fig.17**

46  47  42  43  44  45  48

**fig.18**  43

**fig.19**

**fig.20**

**fig.21**

**fig.22**

**fig.23**

**fig.24**

**fig.25**

0010819

| Category | Citation of document with indication, where appropriate, of relevant passages | Relevant to claim |
|---|---|---|
| **DOCUMENTS CONSIDERED TO BE RELEVANT** | | |
| D | FR - A - 2 365 772 (LAING) <br> * Page 7, line 30 - page 8, line 4; figures 7a,7b * <br> & NL - A - 77 10307 <br> -- | 1,5,6 |
| D | US - A - 3 616 022 (WITHERS) <br> * Figure 10; column 4, lines 23-50; column 5, lines 4-13 * <br> -- | 1-3,7, 10,11 |
| D | FR - A - 2 365 093 (BERGEON) <br> * Claims 1,3; figure 2 * <br> -- | 22,28 |
| D | A.S.H.R.A.E. JOURNAL, vol. 16, nr. 9, september 1974 <br> New York US <br> TELKES: "Solar Energy Storage" pages 38-44 <br> -- | 28-34 |
| D | FR - A - 2 308 677 (PHILIPS) <br> * Complete document * <br> & DE - A - 2 517 920 <br> & NL - A - 76 04124 <br> -- | 28,29, 32-36 |
| D | ENERGIE SOLAIRE ACTUALITES, no. 27, september 1978, <br> Paris, FR <br> "Accumulateur en paraffine" page 3 <br> -- | 30 |
| D | US - A - 4 003 426 (BEST) <br> * Columns 3,4 * | 32-34 |

CLASSIFICATION OF THE APPLICATION (Int. Cl. 3)

F 24 J 3/00
C 09 K 5/06
F 28 F 21/06//
B 60 H 1/02
F 24 D 11/00
F 02 N 17/04

TECHNICAL FIELDS SEARCHED (Int.Cl. 3)

F 24 J
F 24 D
F 24 H
F 28 F

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 09-01-1980 | VERMEESCH |

EPO Form 1503.1 06.78